# EUROPEAN PATENT SPECIFICATION

(11) **EP 1 973 364 B1**
(45) Date of publication and mention of the grant of the patent: **15.09.2010**
(21) Application number: 08005478.6
(22) Date of filing: 25.03.2008
(51) Int. Cl.: H04W 36/08, H04W 76/02

(54) **Method for enhancing data transmission efficiency for a radio resource control procedure for a wireless communications system and related apparatus**
Verfahren zur Erhöhung der Datenübertragungseffizienz für ein Funkressourcen-Steuerverfahren für ein drahtloses Kommunikationssystem und entsprechende Vorrichtung
Procédé pour améliorer l'efficacité de la transmission de données pour procédé de contrôle de ressources radio pour système de communications sans fil et appareil correspondant

(30) Priority: 23.03.2007 US 896500 P
(43) Date of publication of application: 24.09.2008
(73) Proprietor: Innovative Sonic Limited, Tortola (VG)
(72) Inventor: Kuo, Richard Lee-Chee, Peitou Taipei City (TW)
(74) Representative: Schaeberle, Steffen

(56) References cited:
- NOKIA ET AL: "Introduction of Enhanced CELL_FACH state" 3GPP DRAFT; R2-071012 ENHANCED CELL_FACH 25331-730_CR V04, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. St. Louis, USA; 20070220, 20 February 2007 (2007-02-20), XP050134005 [retrieved on 2007-02-20]

## Description

This application claims the benefit of U.S. Provisional Application No. 60/896,500, filed on MAR. 23, 2007 and entitled "Method And Apparatus for Improving HS-DSCH Reception when CCCH is mapped on HS-DSCH in a Wireless Communication System".

The present invention relates to a method and apparatus for enhancing data transmission efficiency with a high speed downlink operation for a wireless communications system according to the pre-characterizing clauses of claims 1 and 7.

The third generation (3G) mobile telecommunications system has adopted a Wideband Code Division Multiple Access (WCDMA) wireless air interface access method for a cellular network. WCDMA provides high frequency spectrum utilization, universal coverage, and high quality, high-speed multimedia data transmission. The WCDMA method also meets all kinds of QoS requirements simultaneously, providing diverse, flexible, two-way transmission services and better communication quality to reduce transmission interruption rates. Through the 3G mobile telecommunications system, a user can utilize a wireless communications device, such as a mobile phone, to realize real-time video communications, conference calls, real-time games, online music broadcasts, and email sending/receiving. However, these functions rely on fast, instantaneous transmission. Thus, targeting at the third generation mobile telecommunication technology, the 3rd Generation Partnership Project (3GPP) provides High Speed Package Access (HSPA) technology, which includes High Speed Downlink Package Access (HSDPA) and High Speed Uplink Package Access (HSUPA), to increase bandwidth utility rate and package data processing efficiency to improve uplink/downlink transmission rate.

On the basis of HSDPA, the 3GPP further introduces HS-DSCH reception in a CELL_FACH state allowing the UE in the CELL_FACH state to monitor a High Speed Downlink Shared Channel (HS-DSCH) accompanied with a Shared Control Channel for HS-DSCH (HS-SCCH) for downlink data reception, so as to improve a peak data rate, a signaling delay, a state transition delay, download times and flexible cell capacity.

A UMTS radio access network (UTRAN) enables the HS-DSCH reception in the CELL_FACH state by including parameters, related to radio resource control (RRC) configuration of HS-SCCH, HS-DSCH and a common HS-DSCH radio network transaction identifier (common H-RNTI), in the system information broadcast. For the UE in an idle mode, the parameters are configured in a "Downlink HS-PDSCH system information" information element (IE) included in a system information block (SIB) type 5/5bis. For the UE in an RRC connection mode, the parameters are configured in a "Downlink HS-PDSCH system information for connected mode" IE included in an SIB type 6.

The. UE may use a common or a dedicated H-RNTI to perform the HS-DSCH reception in the CELL_FACH state. The common and dedicated H-RNTIs are both used as an identity of the UE so that the UE can receive its own packets. Furthermore, the common H-RNTI can be shared by multiple UEs, whereas each dedicated H-RNTI is only allocated to one UE. During reception of media access control (MAC) packets, the UE using the common H-RNTI needs to determine whether the received packets belong to it via UE identification information (i.e. UE ID and UE ID Type) in the packet header. On the other hand, the MAC packets for the UE using the dedicated H-RNTI include no UE identification information to provide better data transmission efficiency.

The UE selects a suitable common H-RNTI to use from the common H-RNTI parameter. On the other hand, if the UTRAN attempts to allocate a dedicated H-RNTI to the UE, the UTRAN sends a related configuration through RRC procedures, such as an RRC connection or a cell update procedure, and the UE stores the configuration in a H-RNTI variable. Each time the HS-DSCH reception in the CELL_FACH state is enabled, the UE uses the dedicated H-RNTI if the H-RNTI variable is set; otherwise the UE uses the common H-RNTI.

The UE has an HS_DSCH_RECEPTION_CELL_FACH_STATE and an HS_DSCH_RECEPTION_OF_CCCH variable revealing a use state of the dedicated and common H-RNTIs, respectively. When the HS_DSCH_RECEPTION_CELL_FACH_STATE variable is set to "TRUE", the UE receives packets mapped to a Dedicated Traffic Channel (DTCH) and a Dedicated Control Channel (DCCH) according to the dedicated H-RNTI. When the HS_DSCH_RECEPTION_OF_CCCH variable is set to "TRUE", the UE receives packets mapped to a Common Control Channel (CCCH) according to the common H-RNTI. If both of the variables are set to "FALSE, this means that the HS-DSCH reception in the CELL_FACH state is deactivated.

According to the RRC specification, the UE has to perform a variable determining procedure to activate or deactivate the HS-DSCH reception in the CELL_FACH state. For applying the HS-DSCH reception in the CELL_FACH state, the following conditions must be met: (1) the UE is in the CELL_FACH state; (2) the variable H_RNTI is set; (3) the SIB type 6 is defined and includes the "Downlink HS-PDSCH system information for connected mode" IE or the SIB type 5/5bis includes the "Downlink HS-PDSCH system information for connected mode" IE. If all the conditions are met, the variable HS_DSCH_RECEPTION_CELL_FACH_STATE is set to "TRUE" for starting HS-DSCH reception in low layers (the MAC and physical layer).

If any of the above conditions is not met and the HS_DSCH_RECEPTION_CELL_FACH_STATE variable is set to "TRUE", the UE sets the variable to "FALSE". In addition, if the UE is in the CELL_FACH state and the HS_ DSCH_RECEPTION_OF_CCCH variable is set to "FALSE", the UE stops the HS-DSCH reception.

The UE may initiate the cell update procedure during the HS-DSCH reception in the CELL_FACH state, and the cause to initiate a cell update procedure may be cell reselection, periodical cell update, a radio link failure, an RLC unrecoverable error or uplink data transmission. The UE also initiates a URA update procedure when performing UTRAN registration area reselection (URA Reselection) or periodical URA update.

In general, RRC message exchange during the cell/URA update procedure is as follows. The UE first sends a CELL/URA UPDATE message to the UTRAN, and then receives a CELL/URA UPDATE CONFIRM message from the UTRAN for radio bearer reconfiguration or release, mobility information update or transport channel reconfiguration.

According to the RRC specification, if the UE performs cell reselection after the CELL/URA UPDATE message is sent, the UE performs the following actions: clearing the H-RNTI variable; setting the HS_DSCH_RECEPTION_OF_CCCH variable to "FALSE"; stopping the HS-DSCH reception in the CELL_FACH state; resending the CELL/URA UPDATE message.

The prior art requires the UE to stop the HS-DSCH reception in the CELL_FACH state when performing cell/URA reselection. However, if the new serving cell supports the HS-DSCH reception in the CELL_FACH state, receiving packets without the HS-DSCH reception results in lower data transmission efficiency and greater signaling delays than with the HS-DSCH reception.

R2-071012, NOKIA ET AL, "Introduction of Enhanced CELL FACH state", ENHANCED CELL FACH 25331-730 CR V04, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. St. Louis, USA; 20070220, 20 February 2007 (2007-02-20) discloses a method comprising initiating a RRC update procedure, sending an update message corresponding to the RRC update procedure to a network terminal and reselecting a serving call after the update message is sent to the network terminal.

This in mind, the present invention aims at providing a method for a UE of a wireless communications system and related communications device that utilizes the HS-DSCH reception in the CELL_FACH state for enhancing data transmission efficiency during cell reselection.

This is achieved by a method and apparatus for enhancing data transmission efficiency for an RRC procedure for a UE of a wireless communications system according to the pre-characterizing clauses of claims 1 and 7. The dependent claims pertain to corresponding further developments and improvements.

As will be seen more clearly from the detailed description following below, the claimed method for enhancing data transmission efficiency for an RRC procedure for a UE of a wireless communications system comprises initiating an RRC update procedure; sending an update message corresponding to the RRC update procedure to a network terminal; reselecting a serving cell after the update message is sent to the network terminal; and using a common H-RNTI for a high speed downlink operation corresponding to a CELL_FACH state if the selected serving cell supports the high speed downlink operation. The high speed downlink operation includes the operation of the HS-DSCH reception in CELL_FACH state.

In the following, the invention is further illustrated by way of example, taking reference to the accompanying drawings. Thereof
FIG. 1 is a functional block diagram of a communications device.
FIG. 2 is a diagram of the program code shown in Fig. 1.
FIG. 3 is a flowchart diagram of a process according to an embodiment of the present invention.
FIG. 4 is a schematic diagram of a wireless communications system.

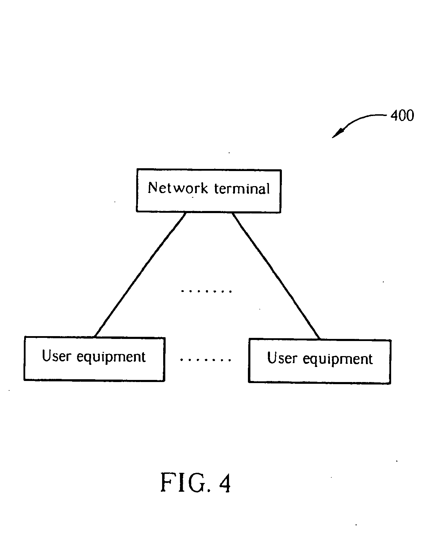

Please refer to FIG .4. FIG. 4 is a schematic diagram of a wireless communications system 400. The wireless communications system 400 is preferred to be a high-speed packet access (HSPA) system of a third generation (3G) mobile communications system, and is briefly formed with a network terminal and a plurality of user equipments. In FIG. 4, the network terminal and the user equipments are simply utilized for illustrating the structure of the wireless communications system 400. Practically, the network terminal may includes a plurality of base stations, radio network controllers and so on according to actual demands, and the user equipments can be apparatuses such as mobile phones, computer systems, etc.

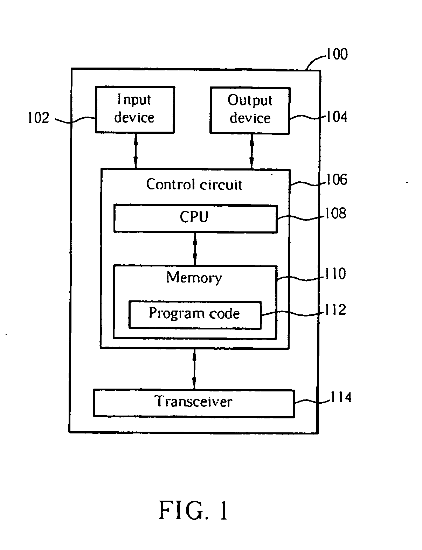

Please refer to FIG. 1, which is a functional block diagram of a communications device 100. The communications device 100 can be utilized for realizing the user equipments or the network terminal in FIG .4. For the sake of brevity, FIG. 1 only shows an input device 102, an output device 104, a control circuit 106, a central processing unit (CPU) 108, a memory 110, a program code 112, and a transceiver 114 of the communications device 100. In the communications device 100, the control circuit 106 executes the program code 112 in the memory 110 through the CPU 108, thereby controlling an operation of the communications device 100. The communications device 100 can receive signals input by a user through the input device 102, such as a keyboard, and can output images and sounds through the output device 104, such as a monitor or speakers. The transceiver 114 is used to receive and transmit wireless signals, delivering received signals to the control circuit 106, and outputting signals generated by the control circuit 106 wirelessly. From a perspective of a communications protocol framework, the transceiver 114 can be seen as a portion of Layer 1, and the control circuit 106 can be utilized to realize functions of Layer 2 and Layer 3. Preferably, the communications device 100 is utilized in a HSPA system of a third generation (3G) mobile communications system and supports high speed downlink operation corresponding to a CELL_FACH state, including HS-DSCH reception in the CELL_FACH state.

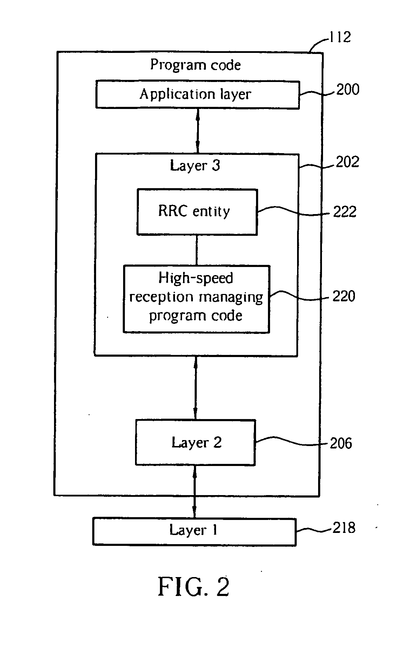

Please continue to refer to FIG. 2. FIG. 2 is a diagram of the program code 112 shown in FIG. 1. The program code 112 includes an application layer 200, a Layer 3 202, and a Layer 2 206, and is coupled to a Layer 1 218. The Layer 3 202 includes a radio resource control (RRC) entity 222 for controlling the Layer 1 218 and the Layer 2 206 and performing peer-to-peer communication with a network terminal, such as a Node-B or a UTRAN. In addition, the RRC entity 222 can switch the communications device 100 among the idle mode, CELL_PCH, URA_PCH, CELL_FACH and CELL_DCH states.

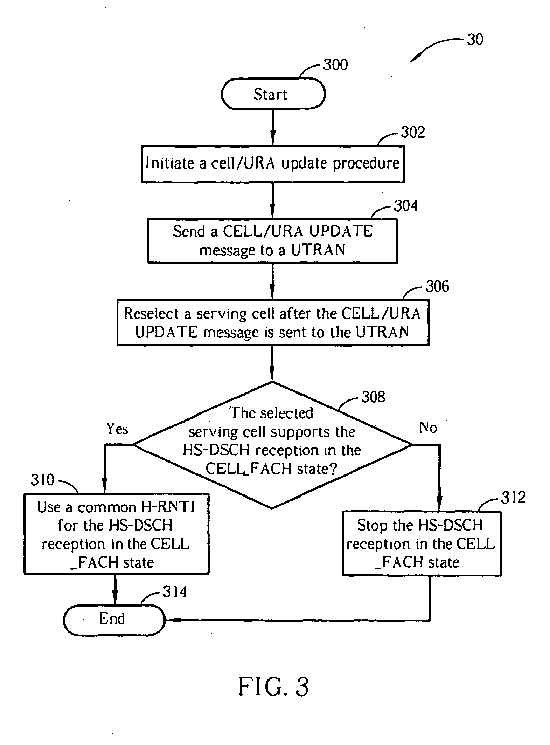

When the communications device 100 initiates a cell/URA update procedure known as an RRC update procedure, the embodiment of the present invention provides a high-speed reception managing program code 220 in the program code 112 to enhance the data transmission efficiency. Please refer to FIG. 3, which illustrates a schematic diagram of a process 30 according to an embodiment of the present invention. The process 30 is applied to a UE of a wireless communications system, and can be compiled into the high-speed reception managing program code 220. The process 30 includes the following steps:
- Step 300:: Start.
- Step 302:: Initiate a cell/URA update procedure.
- Step 304:: Send a CELL/URA UPDATE message to a UTRAN.
- Step 306:: Reselect a serving cell after the CELL/URA UPDATE message is sent to the UTRAN.
- Step 308:: Determine whether the selected serving cell supports the HS-DSCH reception in the CELL_FACH state or not. If so, perform Step 310; otherwise perform Step 312.
- Step 310:: Use a common H-RNTI for the HS-DSCH reception in the CELL_FACH state and then perform Step 314.
- Step 312:: Stop the HS-DSCH reception in the CELL_FACH state and then perform Step 314.
- Step 314:: End.

According to the process 30, the UE initiates the cell/URA update procedure due to cell/URA reselection, periodical cell/URA update or other causes, and thereby sends the CELL/URA UPDATE message for notifying the UTRAN of the procedure initiating cause and related configuration changes. When the UE performs serving cell reselection after sending the CELL/URA UPDATE message to the UTRAN, the UE determines whether the new serving cell supports the HS-DSCH reception in the CELL_FACH state or not. Preferably, the UE determines whether an SIB type 6 includes a "Downlink HS-PDSCH system information for connected mode" IE or whether an SIB type 5/5bis includes a "Downlink HS-PDSCH system information" IE or not. If any of the SIBs includes the related IE, this means that the serving cell supports the HS-DSCH reception in the CELL_FACH state. If none of the SIBs includes the related IE, this means that the serving cell does not support the HS-DSCH reception in the CELL_FACH state. In addition, the UE could have set a dedicated H-RNTI to use for the HS-DSCH reception in the CELL_FACH state before the cell/URA update procedure. In this situation, the UE clears the dedicated H-RNTI during cell reselection.

If the selected serving cell supports the HS-DSCH reception in the CELL_FACH state, the UE uses the common H-RNTI for the HS-DSCH reception in the CELL_FACH state. For putting the common H-RNTI into effect, the UE sets a HS_DSCH_RECEPTION_OF_CCCH variable to "TRUE". During activation of the HS-DSCH reception in CELL_FACH state with the common H-RNTI, the UE starts reception of physical channels (i.e. HS-SCCH and HS-PDSCH) and transport channels (HS-DSCH) according to configuration data of the "Downlink HS-PDSCH system information for connected mode" IE or the "Downlink HS-PDSCH system information" IE. On the contrary, if the serving cell does not support the HS-DSCH reception in the CELL_FACH state, the UE stops all related operations related to the HS-DSCH reception and changes to operate in a non-high speed reception mode with reception of a secondary common control physical channel (S-CCPCH).

In conclusion, the embodiment of the present invention requires the UE to use the HS-DSCH reception in the CELL_FACH state during cell reselection if the high speed downlink operation is available in the newly selected cell. Therefore, the embodiment of the present invention can enhance data transmission efficiency for the cell/URA procedure.

## Claims

1. A method for enhancing data transmission efficiency for a radio resource control, hereinafter called RRC, procedure for a user equipment, also called UE, of a wireless communications system, the method comprising:
initiating an RRC update procedure (302);
sending an update message corresponding to the RRC update procedure to a network terminal (304);
reselecting a serving cell after the update message is sent to the network terminal (306); and
**characterized by** using a common HS-DSCH radio network transaction identifier, abbreviated to common H-RNTI, for a high speed downlink operation corresponding to a CELL_FACH state if the selected serving cell supports the high speed downlink operation (310).

2. The method of claim 1, **characterized by** the UE further comprising clearing a dedicated H-RNTI when reselecting the serving cell if the dedicated H-RNTI is set.

3. The method of claim 1, **characterized in that** the RRC update procedure is a cell update procedure, and the update message is a CELL UPDATE message.

4. The method of claim 1, **characterized in that** the RRC update procedure is a UTRAN registration area, abbreviated to URA, update procedure, and the update message is a URA UPDATE message.

5. The method of claim 1, **characterized in that** using the common H-RNTI for the high speed downlink operation if the selected serving cell supports the high speed downlink operation comprises using the common H-RNTI for the high speed downlink operation if a system information block type 6 includes a "Downlink HS-PDSCH system information for connected mode" information element or a system information block type 5 or type 5bis includes a "Downlink HS-PDSCH system information" information element.

6. The method of claim 5, **characterized in that** using the common H-RNTI for the high speed downlink operation comprises:
setting an HS_DSCH_RECEPTION_OF_CCCH variable to "TRUE" for putting the common H-RNTI into effect; and
starting reception of physical channels and transport channels corresponding to the high speed downlink operation according to configuration data of the "Downlink HS-PDSCH system information for connected mode" information element or configuration data of the "Downlink HS-PDSCH system information" information element.

7. A communications device (100) used in a wireless communications system for enhancing data transmission efficiency for a radio resource control, hereinafter called RRC, procedure, the communications device (100) comprising:
a control circuit (106) for realizing functions of the communications device (100);
a central processing unit (108) installed in the control circuit (106) for executing a program code (112) to operate the control circuit (106); and
a memory (110) coupled to the central processing unit (108) for storing the program code (112);
wherein the program code (112) comprises:
initiating an RRC update procedure (302);
sending an update message corresponding to the RRC update procedure to a network terminal (304);
reselecting a serving cell after the update message is sent to the network terminal (306); and
**characterized by** using a common HS-DSCH radio network transaction identifier, abbreviated to common H-RNTI, for a high speed downlink operation corresponding to a CELL_FACH state if the selected serving cell supports the high speed downlink operation (310).

8. The communications device (100) of claim 7, **characterized in that** the program code (112) further comprises clearing a dedicated H-RNTI when reselecting the serving cell if the dedicated H-RNTI is set.

9. The communications device (100) of claim 7, **characterized in that** the RRC update procedure is a cell update procedure, and the update message is a CELL UPDATE message.

10. The communications device (100) of claim 7, **characterized in that** the RRC update procedure is a UTRAN registration area, abbreviated to URA, update procedure, and the update message is a URA UPDATE message.

11. The communications device (100) of claim 7, **characterized in that** using the common H-RNTI for the high speed downlink operation if the selected serving cell supports the high speed downlink operation comprises using the common H-RNTI for the high speed downlink operation if a system information block type 6 includes a "Downlink HS-PDSCH system information for connected mode" information element or a system information block type 5 or type 5bis includes a "Downlink HS-PDSCH system information" information element.

12. The communications device (100) of claim 11, **characterized in that** using the common H-RNTI for the high speed downlink operation comprises:
setting an HS_DSCH_RECEPTION_OF_CCCH variable to "TRUE" for putting the common H-RNTI into effect; and
starting reception of physical channels and transport channels corresponding to the high speed downlink operation according to configuration data of the "Downlink HS-PDSCH system information for connected mode" information element or configuration data of the "Downlink HS-PDSCH system information" information element.

## Patentansprüche

1. Verfahren zur Erhöhung der Datenübertragungseffizienz für eine Prozedur zur Funkressourcensteuerung, nachfolgend RRC genannt, für ein Anwendergerät, auch UE genannt, eines drahtlosen Kommunikationssystems, wobei das Verfahren umfasst:
Einleiten einer RRC-Aktualisierungsprozedur (302);
Senden einer Aktualisierungsmeldung, die zu der RRC-Aktualisierungsprozedur korrespondiert, an ein Netzwerkterminal (304);
erneutes Auswählen einer Verkehrszelle, nachdem die Aktualisierungsmitteilung an das Netzwerkterminal gesandt wurde (306); und
**gekennzeichnet durch** Verwenden eines gemeinsamen HS-DSCH-Funknetzwerktransaktions-Identifikators, abgekürzt gemeinsamer H-RNTI, für einen Hochgeschwindigkeits-Downlink-Betrieb, der zu einem CELL_FACH-Zustand korrespondiert, wenn die ausgewählte Verkehrszelle den Hochgeschwindigkeits-Downlink-Betrieb unterstützt (310).

2. Verfahren nach Anspruch 1, **dadurch gekennzeichnet, dass** das UE ferner ein Löschen eines dedizierten H-RNTI umfasst, wenn die Verkehrszelle erneut ausgewählt wird, falls der dedizierte H-RNTI gesetzt ist.

3. Verfahren nach Anspruch 1, **dadurch gekennzeichnet, dass** die RRC-Aktualisierungsprozedur eine Zellenaktualisierungsprozedur ist und die Aktualisierungsmitteilung eine Mitteilung "CELL UPDATE" ist.

4. Verfahren nach Anspruch 1, **dadurch gekennzeichnet, dass** die RRC-Aktualisierungsprozedur eine Aktualisierungsprozedur eines UTRAN-Registrierungsbereichs, abgekürzt URA, ist und die Aktualisierungsmitteilung eine Mitteilung "URA UPDATE" ist.

5. Verfahren nach Anspruch 1, **dadurch gekennzeichnet, dass** das Verwenden des gemeinsamen H-RNTI für den Hochgeschwindigkeits-Downlink-Betrieb, wenn die ausgewählte Verkehrszelle den Hochgeschwindigkeits-Downlink-Betrieb unterstützt, ein Verwenden des gemeinsamen H-RNTI für den Hochgeschwindigkeits-Downlink-Betrieb umfasst, wenn ein Systeminformationsblocktyp 6 ein Informationselement "Downlink-HS-PDSCH-Systeminformation für verbundenen Modus" umfasst oder einen Systeminformationsblocktyp 5 oder Typ 5bis ein Informationselement "Downlink-HS-PDSCH-Systeminformation" umfasst.

6. Verfahren nach Anspruch 5, **dadurch gekennzeichnet, dass** das Verwenden des gemeinsamen H-RNTI für den Hochgeschwindigkeits-Downlink-Betrieb umfasst:
Festlegen einer Variablen HS-DSCH_RECEPTION_OF_CCCH auf "wahr", um den gemeinsamen H-RNTI zu realisieren; und
Starten des Empfangs von physikalischen Kanälen und Transportkanälen, die zu dem Hochgeschwindigkeits-Downlink-Betrieb korrespondieren, gemäß Konfigurationsdaten des Informationselements "Downlink-HS-PDSCH-Systeminformation für verbundenen Modus" oder des Informationselements "Downlink-HS-PDSCH-Systeminformation".

7. Kommunikationsvorrichtung (100), verwendet in einem drahtlosen Kommunikationssystem zur Erhöhung der Datenübertragungseffizienz für eine Prozedur der Funkressourcensteuerung, nachfolgend RRC genannt, wobei die Kommunikationsvorrichtung (100) umfasst:
eine Steuerschaltung (106) zum Realisieren von Funktionen der Kommunikationsvorrichtung (100);
eine zentrale Recheneinheit (108), die in der Steuerschaltung (106) integriert ist, um einen Programmcode (112) auszuführen, um die Steuerschaltung (106) zu betätigen; und
einen Speicher (110), der mit der zentralen Recheneinheit (108) verbunden ist,
um den Programmcode (112) zu speichern;
wobei der Programmcode (112) umfasst:
Einleiten einer RRC-Aktualisierungsprozedur (302);
Senden einer Aktualisierungsmeldung, die zu der RRC-Aktualisierungsprozedur korrespondiert, an ein Netzwerkterminal (304);
erneutes Auswählen einer Verkehrszelle, nachdem die Aktualisierungsmitteilung an das Netzwerkterminal gesandt wurde (306); und
**gekennzeichnet durch** Verwenden eines gemeinsamen HS-DSCH-Funknetzwerktransaktions-Identifikators, abgekürzt gemeinsamer H-RNTI, für einen Hochgeschwindigkeits-Downlink-Betrieb, der zu einem CELL_FACH-Zustand korrespondiert, wenn die ausgewählte Verkehrszelle den Hochgeschwindigkeits-Downlink-Betrieb unterstützt (310).

8. Kommunikationsvorrichtung (100) nach Anspruch 7, **dadurch gekennzeichnet, dass** der Programmcode (112) ferner ein Löschen eines dedizierten H-RNTI umfasst, wenn die Verkehrszelle erneut ausgewählt wird, falls der dedizierte H-RNTI gesetzt ist.

9. Kommunikationsvorrichtung (100) nach Anspruch 7, **dadurch gekennzeichnet, dass** die RRC-Aktualisierungsprozedur eine Zellenaktualisierungsprozedur ist und die Aktualisierungsmitteilung eine Mitteilung "CELL UPDATE" ist.

10. Kommunikationsvorrichtung (100) nach Anspruch 7, **dadurch gekennzeichnet, dass** die RRC-Aktualisierungsprozedur eine Aktualisierungsprozedur eines UTRAN-Registrierungsbereichs, abgekürzt URA, ist und die Aktualisierungsmitteilung eine Mitteilung "URA UPDATE" ist.

11. Kommunikationsvorrichtung (100) nach Anspruch 7, **dadurch gekennzeichnet, dass** das Verwenden des gemeinsamen H-RNTI für den Hochgeschwindigkeits-Downlink-Betrieb, wenn die ausgewählte Verkehrszelle den Hochgeschwindigkeits-Downlink-Betrieb unterstützt, ein Verwenden des gemeinsamen H-RNTI für den Hochgeschwindigkeits-Downlink-Betrieb umfasst, wenn ein Systeminformationsblocktyp 6 ein Informationselement "Downlink-HS-PDSCH-Systeminformation für verbundenen Modus" umfasst oder einen Systeminformationsblocktyp 5 oder Typ 5bis ein Informationselement "Downlink-HS-PDSCH-Systeminformation" umfasst.

12. Kommunikationsvorrichtung (100) nach Anspruch 11, **dadurch gekennzeichnet, dass** das Verwenden des gemeinsamen H-RNTI für den Hochgeschwindigkeits-Downlink-Betrieb umfasst:
Festlegen einer Variablen HS-DSCH_RECEPTION_OF_CCCH auf "wahr", um den gemeinsamen H-RNTI zu realisieren; und
Starten des Empfangs von physikalischen Kanälen und Transportkanälen, die zu dem Hochgeschwindigkeits-Downlink-Betrieb korrespondieren, gemäß Konfigurationsdaten des Informationselements "Downlink-HS-PDSCH-Systeminformation für verbundenen Modus" oder des Informationselements "Downlink-HS-PDSCH-Systeminformation".

## Revendications

1. Procédé pour améliorer l'efficacité de transmission de données pour une procédure de contrôle de ressources radio, ci-après appelé RRC, pour un équipement utilisateur, également appelé UE, d'un système de communication sans fil, le procédé comprenant les étapes consistant à :
lancer une procédure d'actualisation de RRC (302) ;
envoyer un message d'actualisation correspondant à la procédure d'actualisation de RRC à un terminal de réseau (304) ;
resélectionner une cellule de service après que le message d'actualisation est envoyé au terminal de réseau (306) ; et
**caractérisé par** l'étape consistant à utiliser un identificateur de transaction de réseau radio HS-DSCH commun, dont l'abréviation est H-RNTI commun, pour une opération de liaison descendante à haute vitesse correspondant à un état CELL_FACH si la cellule de service sélectionnée supporte l'opération de liaison descendante à haute vitesse (310).

2. Procédé selon la revendication 1, **caractérisé en ce que** l'UE comprend en outre l'étape consistant à effacer un H-RNTI dédié lors de la resélection de la cellule de service si le H-RNTI dédié est réglé.

3. Procédé selon la revendication 1, **caractérisé en ce que** la procédure d'actualisation de RRC est une procédure d'actualisation de cellule, et le message d'actualisation est un message CELL UPDATE.

4. Procédé selon la revendication 1, **caractérisé en ce que** la procédure d'actualisation de RRC est une procédure d'actualisation de zone d'enregistrement UTRAN, dont l'abréviation est URA, et le message d'actualisation est un message URA UPDATE.

5. Procédé selon la revendication 1, **caractérisé en ce que** l'étape consistant à utiliser le H-RNTI commun pour l'opération de liaison descendante à haute vitesse si la cellule de service sélectionnée supporte l'opération de liaison descendante à haute vitesse comprend l'étape consistant à utiliser le H-RNTI commun pour l'opération de liaison descendante à haute vitesse si un bloc d'information de système type 6 comprend un élément d'information « Information de système HS-PDSCH de liaison descendante pour mode connecté » ou un bloc d'information de système type 5 ou type 5bis comprend un élément d'information « Information de système HS-PDSCH de liaison descendante ».

6. Procédé selon la revendication 5, **caractérisé en ce que** l'étape consistant à utiliser le H-RNTI commun pour l'opération de liaison descendante à haute vitesse comprend les étapes consistant à :
régler une variable HS_DSCH_RECEPTION_OF_CCCH à « TRUE » pour appliquer le H-RNTI commun ; et
commencer la réception de canaux physiques et de canaux de transport correspondant à l'opération de liaison descendante à haute vitesse selon des données de configuration de l'élément d'information « Information de système HS-PDSCH de liaison descendante pour mode connecté » ou des données de configuration de l'élément d'information « Information de système HS-PDSCH de liaison descendante ».

7. Dispositif de communication (100) utilisé dans un système de communication sans fil pour améliorer l'efficacité de transmission de données pour une procédure de contrôle de ressources radio, ci-après appelé RRC, le dispositif de communication (100) comprenant :
un circuit de commande (106) pour réaliser des fonctions du dispositif de communication (100) ;
une unité centrale de traitement (108) installée dans le circuit de commande (106) pour exécuter un code de programme (112) pour faire fonctionner le circuit de commande (106) ; et
une mémoire (110) couplée à l'unité centrale de traitement (108) pour stocker le code de programme (112) ;
dans lequel le code de programme (112) comprend :
le lancement d'une procédure d'actualisation de RRC (302) ;
l'envoi d'un message d'actualisation correspondant à la procédure d'actualisation de RRC à un terminal de réseau (304) ;
la resélection d'une cellule de service après que le message d'actualisation est envoyé au terminal de réseau (306) ; et
**caractérisé par** l'utilisation d'un identificateur de transaction de réseau radio HS-DSCH commun, dont l'abréviation est H-RNTI commun, pour une opération de liaison descendante à haute vitesse correspondant à un état CELL_FACH si la cellule de service sélectionnée supporte l'opération de liaison descendante à haute vitesse (310).

8. Dispositif de communication (100) selon la revendication 7, **caractérisé en ce que** le code de programme (112) comprend en outre l'effacement d'un H-RNTI dédié lors de la resélection de la cellule de service si le H-RNTI dédié est réglée.

9. Dispositif de communication (100) selon la revendication 7, **caractérisé en ce que** la procédure d'actualisation de RRC est une procédure d'actualisation de cellule, et le message d'actualisation est un message CELL UPDATE.

10. Dispositif de communication (100) selon la revendication 7, **caractérisé en ce que** la procédure d'actualisation de RRC est une procédure d'actualisation de zone d'enregistrement UTRAN, dont l'abréviation est URA, et le message d'actualisation est un message URA UPDATE.

11. Dispositif de communication (100) selon la revendication 7, **caractérisé en ce que** l'utilisation du H-RNTI commun pour l'opération de liaison descendante à haute vitesse si la cellule de service sélectionnée supporte l'opération de liaison descendante à haute vitesse comprend l'utilisation du H-RNTI commun pour l'opération de liaison descendante à haute vitesse si un bloc d'information de système type 6 comprend un élément d'information « Information de système HS-PDSCH de liaison descendante pour mode connecté » ou un bloc d'information de système type 5 ou type 5bis comprend un élément d'information « Information de système HS-PDSCH de liaison descendante ».

12. Dispositif de communication (100) selon la revendication 11, **caractérisé en ce que** l'utilisation du H-RNTI commun pour l'opération de liaison descendante à haute vitesse comprend :
le réglage d'une variable HS_DSCH_RECEPTION_OF_CCCH à « TRUE » pour appliquer le H-RNTI commun ; et
le commencement de la réception de canaux physiques et de canaux de transport correspondant à l'opération de liaison descendante à haute vitesse selon des données de configuration de l'élément d'information « Information de système HS-PDSCH de liaison descendante pour mode connecté » ou des données de configuration de l'élément d'information « Information de système HS-PDSCH de liaison descendante ».
